# EUROPÄISCHE PATENTSCHRIFT

(11) **EP 2 230 495 B1**
(45) Veröffentlichungstag und Bekanntmachung des Hinweises auf die Patenterteilung: **02.11.2011**
(21) Anmeldenummer: 10002322.5
(22) Anmeldetag: 05.03.2010
(51) Int. Cl.: G01G 21/28, G01G 21/30, G01G 23/02

(54) **Dichtmechanismus für eine Waage**
Seal mechanism for a scale
Mécanisme d'étanchéité pour une balance

(30) Priorität: 19.03.2009 DE 102009013545
(43) Veröffentlichungstag der Anmeldung: 22.09.2010
(73) Patentinhaber: WIPOTEC Wiege-und Positioniersysteme GmbH, 67657 Kaiserslautern (DE)
(72) Erfinder: Hauck, Timo, 67663 Kaiserslautern (DE); Zinke, Bernd, 66399 Mandelbachtal (DE)
(74) Vertreter: Mischung, Ralf

(56) Entgegenhaltungen:
- EP-A2- 1 146 322
- WO-A2-2007/050145

## Beschreibung

Die vorliegende Erfindung betrifft eine Waage mit einem Dichtmechanismus nach dem Oberbegriff des Anspruchs 1.

Aus dem Stand der Technik (EP 11 46 322 B1) sind Abdichtungen für Waagen bekannt. Diese dienen der temporären Abdichtung des Waagengehäuses, meist zum Zweck der Reinigung. Dabei wird zwischen einem aus dem Waagengehäuse herausragenden Lastaufnehmer und dem Gehäuse selbst eine beispielsweise aufblasbare Dichtung betätigt, so dass der (Ring-)Spalt zwischen Lastaufnehmer und Gehäuse verschlossen wird, um das Eindringen von Reinigungsmittel zu verhindern. Im unbetätigten Zustand gibt die Dichtung den Lastaufnehmer wieder frei, so dass dieser eine in ihn eingebrachte Gewichtskraft kraftnebenschlussfrei zu einem im Gehäuse angeordneten Wägesensor weiterleiten kann, der bspw. einen Dehnungsmessstreifen aufweist oder nach dem Prinzip der elektromagnetischen Kraftkompensation arbeitet. Die Beaufschlagung der Dichtung mit zuzuführendem Medium (bspw. Druckluft) ist konstruktiv aufwendig und teuer.

Aus der WO 2007/050145 ist eine Abdichtung für eine Waage bekannt, bei der ein relativ zum Waagengehäuse verschiebliches Dichtelement unter Federkraftbeaufschlagung gegen einen am oberen Ende des Lastaufnehmers angeordneten Flansch bewegbar ist. Durch Kontakt mit diesem Flansch wird der zwischen Lastaufnehmer und Gehäuse bestehende Ringspalt gegen die Umgebung abgedichtet. Zum Öffnen der Dichtung wird das verschiebliche Element durch Druckbeaufschlagung gegen die Federkraft herabgesenkt, wodurch der Lastaufnehmer zur Aufnahme seiner Wägefunktion freigestellt wird.

Nachteiligerweise wird bei dieser Dichtung der Lastaufnehmer mit einer (unter Umständen beachtlichen) Federkraft beaufschlagt, welche unmittelbar in den Wägesensor eingeleitet wird. Dort wird die Mechanik entsprechend belastet, was je nach Federkraft auch zu einer Überbeanspruchung einzelner Bauteile oder Bereiche des Wägesensors bzw. der Waage führen kann. Unerwünschte Kriecheffekte könnten die Folge sein. Auch eine elektromagnetische Kompensation dieser in den Sensor eingebrachten Kraft kann unerwünscht sein und u.U. hohe Kompensationsströme erfordern.

Insbesondere hängt die Dichtwirkung von der Anpresskraft der aufeinander liegenden Dichtflächen ab, so dass eine hohe Dichtwirkung zwangsläufig mit einer hohen Belastung des Wägesensors bzw. der Waagenmechanik einhergeht.

Aufgabe der vorliegende Erfindung ist es daher, einen Dichtmechanismus zur zuverlässigen Abdichtung eines Waagengehäuses vorzustellen, bei dem die vorgenannten Nachteile überwunden werden.

Die Aufgabe wird gelöst durch eine Waage nach Anspruch 1.

Der Erfindung liegt die Erkenntnis zugrunde, dass eine einen Wägesensor besonders schonende Dichtwirkung erzeugt werden kann mithilfe eines Hubelements. Dieses wirkt in einer Arbeitsposition dichtend mit dem Gehäuse zusammen, während es in einer nicht dichtenden Ruheposition nur mit dem Lastaufnehmer verbunden ist. Dadurch ergibt sich der Vorteil, dass zwischen Hubelement und einer Komponente des Gehäuses eine Anpresskraft zur Erzielung einer Dichtwirkung bestehen kann, ohne dass diese Anpresskraft zugleich auf den Wägesensor bzw. die Mechanik einwirkt.

Der abzudichtende, den Lastaufnehmer typischerweise umlaufende Ringspalt wird dabei vorteilhaft durch ein Anschlusselement verschlossen, welches vorzugsweise flexibel ausgeführt wird. Dieses Anschlusselement ist mit einem Ende fortdauernd (ggfls. aber auch lösbar) mit dem Lastaufnehmer oder einem darauf aufsitzenden Lastelement verbunden. Das zweite Ende des Anschlusselements kann nach einer Ausführungsvariante ebenfalls fortdauernd (aber ebenfalls ggfls. lösbar) mit dem Hubelement verbunden sein, und zwar in direktem Kraftschluss oder auch indirekt.

Bewegt sich das Hubelement beispielsweise in vertikaler Richtung aufwärts auf das obere Ende des Lastaufnehmers zu bzw. von unten in Richtung des plattenförmigen Lastelements nach oben, so werden die beiden Enden des Anschlusselements aufeinander zu bewegt und ein Ringspalt zwischen Anschlusselement und Gehäuse wird geöffnet. Zweckmäßigerweise ist das Hubelement in diesem Fall ausschließlich mit dem Lastelement verbunden und wirkt als Vorlast auf den Wägesensor ein. In diesem Zustand ist die Waage betriebsbereit.

Bewegt sich das Hubelement dagegen in die umgekehrte Richtung nach unten, so dehnt sich das flexible Anschlusselement in vertikaler Richtung nach unten aus, bis ein Abschnitt des Hubelements mit einer Dichtfläche zusammenwirkt, welche am Gehäuse oder einer damit verbundenen Komponente ausgebildet ist. Der Ringspalt ist damit geschlossen und das Waageninnere gegen die Umgebung abgedichtet.

Eine andere Ausführungsvariante sieht dabei vor, dass das Anschlusselement mit seinem zweiten (vorzugsweise unteren) Ende nicht dauerhaft mit dem Hubelement verbunden ist. Stattdessen kann das Hubelement dieses zweite Ende des Anschlusselements auch erst auf seinen Weg in die Arbeitslage kontaktieren und weiter mitbewegen bzw. herunterziehen. In umgekehrter Bewegungsrichtung des Hubelements, also auf dem Weg von der Arbeits- in die Ruhelage, könnte sich der Kontakt zwischen Hubelement und Anschlusselement wieder lösen, während das Hubelement durch geeignete Mittel bis in die Ruhelage gedrückt wird. So könnte am unteren Ende des Anschlussmittels bspw. eine seitlich abragende, flanschartige Schürze ausgebildet sein, welche vom Hubelement auf dessen Weg in die Arbeitslage kontaktiert bzw. beaufschlagt wird, und zwar vorzugsweise über den gesamten Umfang. Eine derartige Konstruktion erleichtert vorteilhaft die Montage und Wartung des Dichtsystems.

Die Anpresskraft, mit der das Hubelement auf die Dichtfläche am Gehäuse einwirkt, kann erfindungsgemäß weitgehend beliebig gewählt werden. Diese zwischen den Dichtflächen wirkende Kraft bleibt dabei ohne Einfluss auf den Wägesensor. Dieser wird in der geschlossenen (Arbeits-) Position des Hubelements lediglich mit derjenigen Spannkraft beaufschlagt, welche dem Anschlusselement innewohnt, wenn es von dem Lastelement bzw. dem Lastaufnehmer bzw. aus seiner entspannten Lage weg bis hin zur Auflage des Hubelements an der Dichtfläche gestreckt wird. Diese Vorspannkraft kann sehr gering gewählt werden. Das Hubelement selber ruht dagegen in der Arbeitslage auf dem Gehäuse und belastet den Wägesensor dann nicht.

(Üblicherweise erstreckt sich der Lastaufnehmer in vertikaler Richtung nach oben aus dem Waagengehäuse, und an seinem freien Ende ist ein Lastelement zur Auflage der zu wiegenden Güter angeordnet. Die vorstehenden Beschreibungen orientieren sich an dieser Variante. Gleichwohl kann der Lastaufnehmer auch in entgegengesetzter Richtung nach unten oder sogar seitlich aus dem Gehäuse ragen. Die konstruktive Gestaltung der Erfindung ist daran entsprechend anzupassen, jedoch nicht auf eine spezielle Variante beschränkt.)

Ein Kerngedanke der Erfindung liegt darin, das Hubelement mit dem Lastelement oder dem Lastaufnehmer zumindest in der Ruhelage zu verbinden. Im Gegensatz zum Stand der Technik ist daher das Hubelement, welches eine relativ zum Lastaufnehmer bewegliche Komponente des Dichtmechanismus' darstellt, gleichwohl auch während des normalen Wägebetriebes als Vorlast messtechnisch zu berücksichtigen. Erfindungsgemäß kann jedoch die zur Erzielung der Abdichtung erforderliche Dichtkraft unanhängig von einer Anbindung des Hubelements an den Wägesensor weitgehend beliebig gewählt werden, ohne dadurch den Sensor in der vorbeschriebenen, nachteiligen Weise zu sehr zu belasten.

Ein geeigneter Betätigungsmechanismus, der das Hubelement in der Ruheposition (Dichtung geöffnet, Waage betriebsbereit) freistellt, kann das Hubelement zur Erzielung der Dichtwirkung mit einer geeigneten Beaufschlagungskraft zum Zweck der Abdichtung in eine Arbeitsposition (Dichtung geschlossen, Waage nicht betriebsbereit) bewegen.

Wie vorstehend ausgeführt, kann die gehäuseseitige Dichtfläche unmittelbar am Gehäuse oder an einer mit dem Gehäuse vorzugsweise starr verbundenen Komponente ausgebildet sein. In Weiterführung dieser Idee kann eine solche Komponente Teil einer LabyrinthDichtung sein. Beispielsweise könnte ein um die Gehäuseöffnung auf dem Waagengehäuse angeordnetes Ringelement, das den Lastaufnehmer umläuft, Teil einer Labyrinthdichtung sein. Die vertikal nach oben gerichtete Stirnfläche dieses Ringelements könnte zugleich die Dichtfläche sein, welche das Hubelement in seiner Arbeitsposition mit einer Dichtkraft beaufschlagt. Geeignete Dichtmittel (O-Ring oder Ähnliches) können in der nach oben gewandten Stirnfläche des Ringelements oder auch im Bereich der gegenüberliegenden Dichtfläche des Hubelements angeordnet sein. Auch unmittelbar aufeinanderliegende Dichtflächen sind denkbar.

Bspw. bei einem das Hubelement teilweise umgreifenden Anschlusselement könnte auch dieses (statt dem Hubelement) eine Dichtfläche bilden. Das wäre etwa dann der Fall, wenn ein Faltenbalg mit seinem unteren Ende einen oberen Flansch am Hubelement umfasst oder sogar mit der Flanschunterseite verklebt wäre. Dann käme in der Arbeitslage die nach untengewandte Seite des unteren Endes des Faltenbalgs auf der gehäusefesten Dichtfläche zu liegen. Auch denkbar ist die dauerhafte oder lösbare Kopplung von Hubelement und/oder Anschlusselement mit einem Wirkelement, welches seinerseits die Dichtfläche aufweist, welche mit der gehäusefesten Dichtfläche zusammenwirkt.

Eine vorteilhafte Ausführungsform der Erfindung sieht vor, dass das Anschlusselement in Form einer Dichtmembran ausgebildet ist. Darunter soll auch ein Faltenbalg oder ein in seiner Funktionsweise gleichartig arbeitendes Element verstanden werden. Erfindungsgemäß soll dieses Element mit einem ersten Ende dauerhaft am Lastelement oder an dem Lastaufnehmer angeordnet sein. Ein dem ersten Ende gegenüberliegendes zweites Ende der Dichtmembran soll dabei relativ zum ersten Ende flexibel beweglich sein. Es ist erfindungsgemäß mit dem Hubelement gekoppelt oder koppelbar, um dessen Bewegungen aus der Ruhe- in die Arbeitsposition und zurück wenigstens teilweise zu folgen. Durch diese Bewegungen wird die Dichtmembran gedehnt oder aufgefächert bzw. gestaucht oder zusammengeschoben. Dadurch kann der abzudichtende Ringspalt überdeckt bzw. freigegeben werden, wobei diese Bewegung je nach Konstruktion das Hubelement, die Dichtmembran oder beide über den abzudichtenden Spalt führt, um ihn zu überdecken bzw. freizugeben. Die Dichtmembran kann sehr leichtgewichtig ausgeführt sein, solange sie insbesondere im gestreckten bzw. aufgefächerten Zustand den dann überdeckten Ringspalt zuverlässig über die ganze Höhe abdichtet.

Zur Vermeidung fehlerhafter Messergebnisse ist das Hubelement in der Ruhelage als Vorlast kraftnebenschlussfrei an dem Lastelement oder dem Lastaufnehmer befestigt. Damit wird das Hubelement (ebenso wie das flexible Anschlusselement) im Wägebetrieb mitgewogen, es "hängt" quasi frei an dem Lastaufnehmer bzw. dem Lastelement.

Ein bspw. als Faltenbalg ausgeführtes Anschlusselement gestattet ferner den Ausgleich einer möglichen Schieflage zwischen gehäuseseitiger Dichtfläche und der zugehörigen Dichtfläche des Hubelements in der Arbeitslage. Durch die Flexibilität des Anschlusselements kann eine solche Schieflage leicht ausgeglichen werden, so dass sich das Hubelement in seiner Arbeitsposition an die tatsächliche räumliche Lage der gehäuseseitigen Dichtfläche anpassen kann. Das zweite (untere) Ende des flexiblen Anschlusselements ist zumindest in der Arbeitslage mit dem Hubelement verbunden ist und kann sich der Schieflage ebenfalls anpassen.

Eine vorteilhafte Weiterbildung der Erfindung sieht vor, dass das Hubelement von einer Vorspannkraft beaufschlagt wird, welche das Hubelement in die Ruhelage drängt. Dies bedeutet, dass das Hubelement stets die Position anstrebt, in der die Dichtung geöffnet und die Waage betriebsbereit ist. Diese Vorspannkraft kann erfindungsgemäß durch ein ziehendes oder drückendes Federelement oder ein anderes Element gleicher Wirkung aufgebracht werden, welches sich an dem Lastaufnehmer oder einem damit verbundenen Teil abstützt. Denkbar ist beispielsweise eine Spiralfeder, die um den Lastaufnehmer angeordnet ist und das Hubelement von unten mit der Federkraft beaufschlagt. Das Hubelement wird dabei nach oben in Richtung auf ein am Ende des Lastaufnehmers angeordnetes Lastelement gedrängt. Sofern das Anschlusselement an seinem zweiten Ende dauerhaft mit dem Hubelement verbunden ist, wird das Anschlusselement dabei zusammengedrückt und Hubelement bzw. Anschlusselement geben bei ihrer Aufwärtsbewegung den Ringspalt frei.

Zweckmäßigerweise bildet auch das Federelement eine Vorlast auf dem Wähesensor, wird also im normalen Wägebetrieb messtechnisch mit berücksichtigt. Durch die vorgespannte Position des Hubelements ist dessen Ruhelage definiert. Mithilfe eines nachfolgend noch zu beschreibenden Betätigungsmechanismus wird das Hubelement aus dieser Ruhelage in die Arbeitslage bewegt.

Anstelle oder ergänzend zu einem separat vorzusehenden Federelement kann die Vorspannkraft auch durch das Anschlusselement selbst erzeugt werden. Beispielsweise kann dieses als Faltenbalg mit Zugfeder-Eigenschaft ausgebildet sein, wobei das zweite (untere) Ende dauerhaft mit dem Hubelement verbunden ist. In diesem Fall strebt der Faltenbalg stets seine gestauchte bzw. zusammengezogene Position an, wodurch das am freien (unteren) Ende des Faltenbalgs angeordnete Hubelement ebenfalls mit angehoben wird, so dass der Ringspalt freigegeben wird. Die dem Anschlusselement innewohnende Federkraft wird zweckmäßigerweise so gewählt, dass sie gerade ausreicht, um das Hubelement in der Ruheposition zu halten. Wird das Hubelement gegen die Federkraft in die Arbeitsposition bewegt, so wirkt die dann im Anschlusselement erzeugte, geringe Spannkraft auf den Wägesensor bzw. dessen Mechanik ein.

Nach einer vorteilhaften Ausführungsform der Erfindung ist vorgesehen, dass das Hubelement über einen innerhalb oder außerhalb des Gehäuses angeordneten Betätigungsmechanismus mit einer Betätigungskraft beaufschlagbar ist. Zweckmäßigerweise wirkt die Betätigungskraft in Richtung der Arbeitslage. Der Betätigungsmechanismus kann dabei so ausgebildet sein, dass er, nachdem das Hubelement die Arbeitslage eingenommen hat, eine vorgebbare Anpresskraft erzeugt, um das Hubelement auf die gehäuseseitige Dichtfläche anzupressen und so die gewünschte Dichtwirkung zu erzielen. Diese Anpresskraft belastet den Wägesensor erfindungsgemäß nicht. Eine einfache Ausführungsform des Betätigungsmechanismus umfasst eine Kurvenscheibe oder einen Nocken, der bei Drehung um seine Achse mit dem Hubelement zusammenwirkt, um dieses zu bewegen. Alternative Ausführungsformen umfassen eine rein manuelle Betätigung ebenso wie einen pneumatischen, elektromechanischen, piezoelektrischen oder anderen, gleichwirkenden und dem Fachmann geläufigen Mechanismus. Auch ein Antrieb mit einer Verstellschraube oder einem spindelartigen Mechanismus ist denkbar. Um zu gewährleisten, dass das Hubelement in seiner Ruhelage kraftnebenschlussfrei an den Lastaufnehmer gekoppelt ist, wird der Betätigungsmechanismus vorzugsweise so ausgeführt, dass er das Hubelement in dessen Ruhelage nicht berührt.

Eine weitere vorteilhafte Ausführungsform der Erfindung sieht vor, dass der Lastaufnehmer als Führung für die Bewegung des Hubelements dient. Dadurch wird gewährleistet, dass das Hubelement die für die Abdichtung erforderliche Arbeitslage im Rahmen vorgebbarer Toleranzen genau einnimmt. Alternativ oder ergänzend kann das Hubelement zur Führung seiner Bewegungen auch mit einer gehäusefesten Führung zusammenwirkt. Dabei ist zu beachten, dass dieser Führungsmechanismus seine Wirkung erst dann entfalten sollte, nachdem das Hubelement seine Ruhelage verlassen hat, die Waage also vorübergehend nicht betrieben werden soll. In diesem Fall ist der zwischen der gehäuseseitigen Führung und dem Hubelement zustande kommende Kraftnebenschluss unerheblich.

Denkbar ist eine profilierte Dichtfläche des Hubelements, welche mit einer komplementär dazu ausgebildeten gehäusefesten Dichtfläche auch formschlüssig zusammenwirkt. Auch dadurch kann - neben einer evtl. verbesserten Dichtwirkung - eine Zentrierung bzw. Führung des Hubelements relativ zum Gehäuse erzielt werden.

Vorstehend war die Dichtung hauptsächlich zu dem Zweck vorgesehen, um die meist spaltartige Öffnung zum Inneren des Waagengehäuses temporär zu schließen und so das Eindringen von Reinigungsmedium oder andern Stoffen zu verhindern. Eine weitere Ausführungsform sieht aber auch vor, die Dichtung als Explosionsschutzvorrichtung auszubilden, die z.B. automatisch betätigt wird, sobald ein Gaswarngerät auslöst. Die Dichtung kann also auch zur Erzielung einer vorgebbaren Mindestdichtwirkung vorgesehen sein.

Ferner sieht eine Ausführungsvariante vor, den Dichtmechanismus als Überlastschutz und gleichzeitig oder alternativ als Transportschutz auszubilden bzw. zu verwenden, so dass die Abdichtung nicht nur kurzzeitig (bspw. zu Reinigungszwecken), sondern auch für längere Zeitabschnitte (Stunden, Tage) zum Einsatz kommt.

Weitere vorteilhafte Ausführungsformen ergeben sich aus den Unteransprüchen.

Nachfolgend soll eine Ausführungsform der Erfindung anhand eines Figurenbeispiels näher erläutert werden.

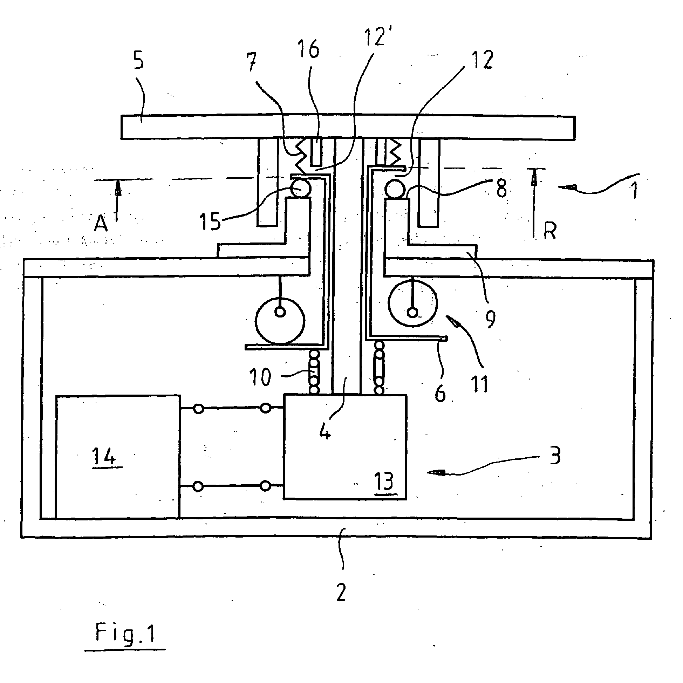

Die einzige Fig. 1 zeigt in schematischer Schnittdarstellung eine Waage mit dem erfindungsgemäßen Dichtmechanismus 1.

In einem Gehäuse 2 ist ein Wägesensor 3 angeordnet. Der Sensor 3 umfasst nach diesem Ausführungsbeispiel einen ortsfesten Abschnitt 14 und einen relativ dazu vertikal beweglichen Abschnitt 13, wobei der bewegliche Abschnitt 13 mit einem Lastaufnehmer 4 gekoppelt ist. Der stabförmig ausgeführte Lastaufnehmer 4 erstreckt sich in vertikaler Richtung durch das Gehäuse 2 hindurch nach oben und wird auf der Außenseite des Gehäuses 2 von einem Lastelement 5 beaufschlagt. Ein auf das Lastelement 5 aufgelegtes Gewicht belastet den beweglichen Abschnitt 13 des Wägesensors über den Lastaufnehmer 4 in vertikaler Richtung nach unten. Ein nicht dargestellte, vorzugsweise elektromagnetischer Kraftkompensationsmechanismus kompensiert diese Kraft im normalen Wägebetrieb mit einer einstellbaren Gegenkraft, welche zur Ermittlung des Gewichts dient.

Der Lastaufnehmer 4 wird von einem Hubelement 6 umfasst. Das Hubelement 6 hat im Wesentlichen rohrförmige Gestalt und weist an seinen beiden Enden jeweils eine flanschartige Erweiterung auf. Das Hubelement 6 kann sich erfindungsgemäß zwischen zwei Positionen bewegen. In einer Arbeitsposition A liegt der obere Flansch auf einem als O-Ring ausgebildeten Dichtmittel 15 auf, welches seinerseits gegen die obere Stirnfläche 8 einer Dichtungskomponente 9 gedrückt wird. In einer Ruheposition R dagegen gibt das Hubelement 6 zwischen seinem oberen Flansch und dem Dichtelement 15 einen Ringspalt 12 frei.

(Nur zum besseren Verständnis sind beide Positionen des Hubelements 6 in Fig. 1 gleichzeitig dargestellt). Der in Fig. 1 links vom Lastaufnehmer 4 dargestellte Abschnitt zeigt das Hubelement 6 in der abgesenkten Arbeitsposition A. Der Abschnitt rechts vom Lastaufnehmer 4 zeigt das Hubelement 6 in seiner angehobenen Ruheposition R.

Das Hubelement 6 ist über ein Anschlusselement 7 mit dem Lastelement 5 verbunden. Das Anschlusselement 7 ist als Faltenbalg ausgeführt und lässt sich in vertikaler Richtung dehnen bzw. stauchen. Während das obere Ende des Anschlusselements 7 mit dem Lastelement 5 verbunden ist, folgt das gegenüberliegende untere Ende des Anschlusselements 7 den vertikalen Bewegungen des Hubelements 6 von der Ruhelage R in die Arbeitslage A und zurück.

In der Arbeitslage A wird das Anschlusselement 7 so weit nach unten aufgefächert bzw. gedehnt, bis der obere Flansch des Hubelements 6 mit dem Dichtmittel 15 zusammenwirkt. In diesem Fall ist das Waageninnere gegen Eindringen eines Mediums (bspw. Staub, Reinigungsmittel, Gase etc.) von außen zuverlässig geschützt, da das Anschlusselement 7 in seiner aufgefächerten Lage zusammen mit dem Hubelement 6 den Ringspalt 12 überdeckt.

Während das Hubelement 6 den zunächst bestehenden und abzudichtenden Spalt 12 verschließt, überdeckt bzw. dichtet das flexible Anschlusselement 7 den Spalt 12', der sich durch die Abwärtsbewegung des hier starr ausgeführten Hubelements 6 oberhalb von dessen Flansch auftut.

In der Ruhelage R dagegen ist das Hubelement 6 so weit angehoben, bis es mit seinem oberen Flansch gegen einen (nicht zwingend nötigen) Anschlag 16 stößt. Das Anschlusselement 7 wird dabei gestaucht und gibt den Ringspalt 12 frei. In diesem Zustand ist die Waage betriebsbereit, allerdings ist das Waageninnere gegen unerwünschtes Eindringen von Medium bei offenem Ringspalt nicht abgedichtet.

Wie Fig. 1 zu entnehmen ist, ist das Hubelement 6 in seiner Ruheposition R kraftnebenschlussfrei mit dem Lastelement 5 bzw. dem Lastaufnehmer 4 gekoppelt. Es ruht dann als mitzuwiegende Vorlast auf dem beweglichen Abschnitt 13 des Wägesensors. Ein ebenfalls am Element 13 angeordnetes Federelement 10 beaufschlagt den unteren Flansch des Hubelements 6 von unten, wodurch das Hubelement 6 seine Ruhelage R am Anschlag 16 einnimmt, solange es nicht aktiv aus dieser Position herausgedrängt wird. Das Hubelement 6 bildet dabei ebenso eine Vorlast wie das Federelement 10, der Anschlag 16 und das Anschlusselement 7. Zugleich ist das Hubelement 6 so ausgeführt, dass es bei Einnahme der Ruhelage R mit keiner ortsfesten Komponente des Gehäuses der Waage in Verbindung steht, so dass ein Kraftnebenschluss vermieden wird.

Ein innerhalb des Waagengehäuses 2 angeordneter Betätigungsmechanismus 11 dient dazu, das Hubelement 6 gegen die Federkraft des Federelements 10 aus der Ruhelage R in die Arbeitslage A herabzuziehen. Dazu benutzt der Betätigungsmechanismus 11 einen Exzenter. Dieser gerät bei Schwenkung um seine Exzenterachse in Kontakt mit der Oberseite des unteren Flansches des Hubelements 6. Bei weiterem Verschwenken des Exzenters wird der untere Flansch und damit das gesamte Hubelement 6 in vertikaler Richtung herabgedrückt. Dabei löst es sich vom oberen Anschlag 16 und dehnt mit seiner Bewegung zugleich das Anschlusselement 7, bis schließlich die Arbeitslage A erreicht ist.

In der Arbeitslage A drückt das Hubelement 6 auf ein Dichtelement 15, welches seinerseits mit der oberen Stirnfläche 8 einer Labyrinthdichtung 9 zusammenwirkt. Alle Kräfte (Gewichts- oder Anpresskräfte), die über die Dichtung in das Wagengehäuse übertragen werden, sind dann vorteilhaft von dem Lastaufnehmer 4 des Wägesensors 3 entkoppelt.

Der Betätigungsmechanismus 11 kann vorteilhafterweise so ausgelegt werden, dass das Hubelement 6 mit einer vorgebbaren Dichtkraft auf das Dichtelement 15 bzw. die Dichtfläche 8 drückt, um so die Abdichtung des Waageninneren sicherzustellen. Obwohl das mit dem Lastaufnehmer 4 gekoppelte Hubelement 6 in der Arbeitslage A auch mit einer hohen vertikalen Dichtkraft beaufschlagbar ist, wird dabei nur diejenige Kraft in den Wägesensor 3 weitergeleitet, welche aus der Kompression des Federelements 10 und der Dehnung des Anschlusselements 7 resultiert (zzgl. der permanent zur Vorlast zählenden Komponenten), denn das Hubelement selber ruht in der Arbeitslage A auf dem Gehäuse bzw. der Komponente 9.

## Patentansprüche

1. Waage mit einem Dichtmechanismus (1), bei der in einem Gehäuse (2) ein Wägesensor (3) angeordnet ist, welcher über einen durch eine Gehäuseöffnung nach außen ragenden, vorzugsweise stabförmigen Lastaufnehmer (4) mit einer zu messenden Gewichtskraft beaufschlagbar ist, wobei der Lastaufnehmer (4) an seinem freien Ende ein vorzugsweise plattenförmiges Lastelement (5) zur Auflage von zu wiegenden Gütern trägt,
a) mit einem relativ zum Lastaufnehmer (4) beweglichen Hubelement (6), welches zwischen einer Arbeitslage (A), in der das Hubelement (6) eine Abdichtung der Gehäuseöffnung bewirkt, und einer Ruhelage (R), in der die Gehäuseöffnung nicht abgedichtet ist, bewegbar ist,
**dadurch gekennzeichnet,**
b) **dass** das Hubelement (6) in der Ruhelage (R) als Vorlast mit dem Lastelement (5) oder dem Lastaufnehmer (4) verbunden ist.

2. Waage nach Anspruch 1, **dadurch gekennzeichnet, dass** das Hubelement (6) in der Arbeitslage (A) ein Anschlusselement (7) beaufschlagt, um **dadurch** einen Gehäusespalt (12) zu verschließen.

3. Waage nach Anspruch 1 oder 2, **dadurch gekennzeichnet, dass** das Hubelement (6) über ein flexibles Anschlusselement (7) mit dem Lastelement (5) oder dem Lastaufnehmer (4) verbunden ist.

4. Waage nach einem der vorigen Ansprüche, **dadurch gekennzeichnet, dass** eine Fläche des Hubelements (6) oder des Anschlusselements (7) oder eines mit dem Hubelement (6) oder dem Anschlusselements (7) gekoppelten Wirkelements in der Arbeitslage (A) mit einer Dichtfläche (8) mittelbar oder unmittelbar zusammenwirkt, wobei die Dichtfläche (8) am Gehäuse (2) oder an einer mit dem Gehäuse (2) vorzugsweise starr verbundenen Komponente (9) ausgebildet ist.

5. Waage nach einem der vorigen Ansprüche, **dadurch gekennzeichnet, dass** das Anschlusselement (7) in Form einer Dichtmembran ausgebildet ist, welche mit einem ersten Ende am Lastelement (5) oder dem Lastaufnehmer (4) und an dem gegenüberliegenden zweiten Membranende mit Hubelement (6) verbunden oder vom Hubelement (6) beaufschlagbar ist, um mit diesem zweiten Ende den Bewegungen des Hubelements (6) wenigstens in Richtung der Arbeitslage (A) zu folgen.

6. Waage nach einem der vorigen Ansprüche, **dadurch gekennzeichnet, dass** das Hubelement (6) von einer Vorspannkraft beaufschlagt wird, welche das Hubelement (6) in die Ruhelage (R) oder in die Arbeitslage (A) drängt.

7. Waage nach dem vorhergehenden Anspruch, **dadurch gekennzeichnet, dass** die Vorspannkraft durch ein Federelement (10) aufgebracht wird, welches sich an dem Lastaufnehmer (4) oder einem damit verbundenen Teil abstützt.

8. Waage nach einem der beiden vorhergehenden Ansprüche, **dadurch gekennzeichnet, dass** die Vorspannkraft durch ein federnd ausgebildetes Anschlusselement (7) erzeugt wird.

9. Waage nach einem der vorigen Ansprüche, **dadurch gekennzeichnet, dass** das Hubelement (7) über einen innerhalb oder außerhalb des Gehäuses (2) angeordneten Betätigungsmechanismus (11) mit einer Betätigungskraft beaufschlagbar ist, welche das Hubelement (6) in die Arbeitslage (A) drängt.

10. Waage nach einem der vorigen Ansprüche, **dadurch gekennzeichnet, dass** das Anschlusselement (7) und/oder das Hubelement (6) bei der Bewegung des Hubelements (6) von der Ruhelage (R) in die Arbeitslage (A) einen Ringspalt (12, 12') zwischen Gehäuse (2) oder einer mit dem Gehäuse (2) verbundenen Komponente (9) und dem Lastelement (5) bzw. Lastaufnehmer (4) verschließt.

11. Waage nach einem der vorigen Ansprüche, **dadurch gekennzeichnet, dass** der Lastaufnehmer (4) als Führung für die Bewegungen des Hubelements (6) dient.

12. Waage nach einem der vorigen Ansprüche, **dadurch gekennzeichnet, dass** das Hubelement (6) zur Führung seiner Bewegungen mit einer gehäusefesten Führung zusammenwirkt, nachdem es seine Ruhelage (R) verlassen hat.

## Claims

1. Weighing machine which has a sealing mechanism (1) and in which there is arranged, in a housing (2), a weighing sensor (3) that can be acted upon, via a preferably bar-shaped load-receiving means (4) which protrudes outwards through an aperture in the housing, by a weight which is to be measured, wherein the load-receiving means (4) carries a preferably plate-shaped loading element (5) at its free end for supporting goods to be weighed,
a) with a lifting element (6) which is movable relative to the load-receiving means (4) and which can be moved between a working position (A) in which the lifting element (6) brings about sealing-off of the aperture in the housing, and an inoperative position (R) in which said aperture in the housing is not sealed off,
**characterised in that,**
b) in the inoperative position (R), the lifting element (6) is connected to the loading element (5) or to the load-receiving means (4) as a preliminary load.

2. Weighing machine according to claim 1, **characterised in that**, in the working position (A), the lifting element (6) acts upon a connecting element (7) in order to thereby occlude a gap (12) in the housing.

3. Weighing machine according to claim 1 or 2, **characterised in that** the lifting element (6) is connected to the loading element (5) or to the load-receiving means (4) via a flexible connecting element (7).

4. Weighing machine according to one of the previous claims, **characterised in that**, in the working position (A), a face of the lifting element (6) or of the connecting element (7) or of an operative element coupled to said lifting element (6) or said connecting element (7) interacts indirectly or directly with a sealing face (8), wherein said sealing face (8) is constructed on the housing (2) or on a component (9) which is connected, preferably rigidly, to said housing (2).

5. Weighing machine according to one of the previous claims, **characterised in that** the connecting element (7) is constructed in the form of a sealing diaphragm which is connected, by a first end, to the loading element (5) or to the load-receiving means (4) and, at the second, opposite end of the diaphragm, to the lifting element (6), or which can be acted upon by said lifting element (6), in order to follow, with the said second end, the movements of the lifting element (6), at least in the direction of the working position (A) .

6. Weighing machine according to one of the previous claims, **characterised in that** the lifting element (6) is acted upon by a pre-stressing force which forces said lifting element (6) into the inoperative position (R) or into the working position (A).

7. Weighing machine according to the preceding claim, **characterised in that** the pre-stressing force is applied by a spring element (10) which is supported on the load-receiving means (4) or on a part connected thereto.

8. Weighing machine according to one of the two preceding claims, **characterised in that** the pre-stressing force is generated by a connecting element (7) of resilient construction.

9. Weighing machine according to one of the previous claims, **characterised in that** the lifting element (6) can be acted upon, via an actuating mechanism (11) arranged inside or outside the housing (2), by an actuating force which forces said lifting element (6) into the working position (A).

10. Weighing machine according to one of the previous claims, **characterised in that**, when the lifting element (6) moves from the inoperative position (R) into the working position (A), the connecting element (7) and/or the lifting element (6) occludes an annular gap (12, 12') between the housing (2), or a component (9) connected to said housing (2), and the loading element (5) or load-receiving means (4) respectively.

11. Weighing machine according to one of the previous claims, **characterised in that** the load-receiving means (4) serves as a guide for the movements of the lifting element (6).

12. Weighing machine according to one of the previous claims, **characterised in that**, after it has left its inoperative position (R), the lifting element (6) interacts, for the purpose of guiding its movements, with a guide which is integral with the housing.

## Revendications

1. Balance comprenant un mécanisme d'étanchéité (1), dans un boîtier (2) de laquelle est agencé un capteur de pesage (3) qui peut être sollicité par un poids à mesurer, via un organe de réception de charge (4) présentant de préférence la forme d'une tige, en saillie vers l'extérieur à travers une ouverture du boîtier, dans laquelle l'organe de réception de charge (4) porte à son extrémité libre un élément de charge (5), de préférence sous la forme d'un plateau, permettant de déposer les biens à peser,
a) un élément (6) mobile par rapport à l'organe de réception de charge (4) et déplaçable entre une position de travail (A), dans laquelle l'élément de mobile (6) assure une étanchéité de l'ouverture du boîtier, et une position de repos (R), dans laquelle l'ouverture du boîtier n'est pas étanchée,
**caractérisée en ce que**
b) en position de repos (R) l'élément mobile (6) est relié en tant que précontrainte à l'élément de charge (5) ou à l'organe de réception de charge (4).

2. Balance selon la revendication 1, **caractérisée en ce que** en position de travail (A) l'élément mobile (6) sollicite un élément de jonction (7) de manière à fermer une fente (12) du boîtier.

3. Balance selon la revendication 1 ou 2, **caractérisée en ce que** l'élément mobile (6) est relié à l'élément de charge (5) ou à l'organe de réception de charge (4) par le biais d'un élément de jonction flexible (7).

4. Balance selon l'une quelconque des revendications précédentes, **caractérisée en ce qu'**en position de travail (A), une surface de l'élément mobile (6) ou de l'élément de jonction (7) ou d'un élément d'actionnement couplé à l'élément mobile (6) ou à l'élément de jonction (7) coopère indirectement ou directement avec une surface d'étanchéité (8), la surface d'étanchéité (8) étant formée sur le boîtier (2) ou sur un composant (9), relié au boîtier (2) de préférence fixé au boîtier (2).

5. Balance selon l'une quelconque des revendications précédentes, **caractérisée en ce que** l'élément de jonction (7) est réalisé sous la forme d'une membrane d'étanchéité, laquelle est raccordée par une première extrémité à l'élément de charge (5) ou à l'organe de réception de charge (4) et, au niveau de la seconde extrémité opposée de la membrane, à l'élément mobile (6), ou peut être sollicitée par l'élément mobile (6), pour suivre avec cette seconde extrémité les déplacements de l'élément mobile (6) au moins en direction de la position de travail (A).

6. Balance selon l'une quelconque des revendications précédentes, **caractérisée en ce que** l'élément mobile (6) est sollicité par une force de précontrainte, qui pousse l'élément mobile (6) en position de repos (R) ou en position de travail (A).

7. Balance selon l'une quelconque des revendications précédentes, **caractérisée en ce que** la force de précontrainte est appliquée par un ressort (10), qui prend appui sur l'organe de réception de charge (4) ou sur une partie raccordée à ce dernier.

8. Balance selon l'une quelconque des deux revendications précédentes, **caractérisée en ce que** la force de précontrainte est produite via un élément de jonction (7) sous la forme d'un ressort.

9. Balance selon l'une quelconque des revendications précédentes, **caractérisée en ce que** l'élément mobile (7) peut être sollicité par une force d'actionnement via un mécanisme d'actionnement (11) agencé à l'intérieur ou à l'extérieur du boîtier (2), laquelle force d'actionnement pousse l'élément mobile (6) en position de travail (A).

10. Balance selon l'une quelconque des revendications précédentes, **caractérisée en ce que** l'élément de jonction (7) et/ou l'élément mobile (6) ferme(nt), lors du déplacement de l'élément mobile (6) de la position de repos (R) à la position de travail (A), un espace annulaire (12, 12') entre le boîtier (2) ou un composant (9) relié au boîtier (2), et l'élément de charge (5) ou l'organe de réception de charge (4).

11. Balance selon l'une quelconque des revendications précédentes, **caractérisée en ce que** l'organe de réception de charge (4) sert de guide pour les déplacements de l'élément mobile (6).

12. Balance selon l'une quelconque des revendications précédentes, **caractérisée en ce que** l'élément mobile (6) coopère avec un guide fixé au boîtier pour guider ses mouvements, après qu'il a quitté sa position de repos (R).
